# EUROPÄISCHE PATENTANMELDUNG

(11) **EP 1 111 335 A2**
(43) Veröffentlichungstag der Anmeldung: **27.06.2001**
(21) Anmeldenummer: 00127040.4
(22) Anmeldetag: 09.12.2000
(51) Int. Cl.: G01C 19/00, G01C 21/26

(54) **Für ein Kraftfahrzeug bestimmter Navigationsrechner**

(30) Priorität: 23.12.1999 DE 19962823
(71) Anmelder: Mannesmann VDO Aktiengesellschaft, 60388 Frankfurt am Main (DE)
(72) Erfinder: Nau, Dieter, 35580 Wetzlar-Nauborn (DE)
(74) Vertreter: Keller, Thomas; Dipl.-Ing. (FH)

(57) **Zusammenfassung**

Bei einem Navigationsrechner eines Kraftfahrzeugs ist das Gehäuse eines Gyroskops winkelverstellbar in einer Gehäusewand des Navigationsrechners angeordnet. Hierzu sieht die Erfindung vor, dass das Gehäuse des Gyroskops zwei aus seiner Oberseite nach oben und zugleich radial nach außen gerichtete, einander gegenüberliegende Federzungen (5, 6) hat und die Gehäusewand eine Aufnahme (2) mit zwei gegenüberliegenden Durchlässen (7, 8) zum Durchschieben der Federzungen (5, 6) und im Anschluss an die Durchlässe (7, 8) jeweils eine kreisbogenförmige Drehkulisse (9, 10) als Auflage für die Federzungen (5, 6) aufweist.

## Beschreibung

Die Erfindung betrifft einen für ein Kraftfahrzeug bestimmten Navigationsrechner, welcher eine Gehäusewand mit einem daran befestigten, in einem separaten Gehäuse angeordneten Gyroskop hat, das zur Ermittlung einer Fahrzeugdrehung um seine Vertikalachse in einer horizontalen Einbaulage ausgerichtet ist.

Navigationsrechner der vorstehenden Art kommen zunehmend in heutigen Kraftfahrzeugen der gehobenen Klasse zum Einsatz, weil sie die Orientierung in unbekannten Gegenden erleichtern. Üblicherweise sind solche Navigationsrechner in Einbauschächten der Armaturentafel angeordnet. Bei unterschiedlichen Fahrzeugfabrikaten und Fahrzeugmodellen weisen diese Einbauschächte unterschiedliche Winkellagen auf. Das Gyroskop, auch Drehratensensor genannt, muss jedoch stets horizontal ausgerichtet sein. Deshalb muss man bei der Anbringung des Gyroskops an der Gehäusewand des Navigatiosnrechners die Winkellage des Einbauschachtes berücksichtigen, was fertigungstechnisch einen erheblichen Aufwand darstellt und die Verwendung des Navigationsrechners auf ein Fahrzeugmodel begrenzt. Wünschenswert ist es jedoch, dass man eine stets gleiche Gyroskopausführung für unterschiedlich geneigte Einbauschächte verwenden kann.

Der Erfindung liegt das Problem zugrunde, einen für ein Kraftfahrzeug bestimmten Navigationsrechner der eingangs genannten Art so auszubilden, dass er mit möglichst geringem Aufwand an unterschiedlich geneigte Einbauschächte angepasst werden kann.

Dieses Problem wird erfindungsgemäß dadurch gelöst, dass das Gehäuse des Gyroskops winkelverstellbar in der Gehäusewand des Navigationsrechners angeordnet ist.

Durch diese erfindungsgemäße Winkelverstellbarkeit kann man beim Einbau des Navigationsrechners die Winkellage des Gehäuses des Gyroskops so einstellen, dass das Gyroskop im endgültigen Einbauzustand des Navigationsrechners exakt waagerecht ausgerichtet ist.

Die Winkelverstellbarkeit lässt sich ohne Werkzeug erreichen, wenn das Gehäuse des Gyroskops zwei aus seiner Oberseite nach oben und zugleich radial nach außen gerichtete, einander gegenüberliegende Federzungen hat und die Gehäusewand eine Aufnahme mit zwei gegenüberliegenden Durchlässen zum Durchschieben der Federzungen und im Anschluss an die Durchlässe jeweils eine kreisbogenförmige Drehkulisse als Auflage für die Federzungen hat. Bei einer solchen Ausgestaltung der Erfindung bilden die Mittel zur Winkelverstellung zugleich eine Halterung für das Gehäuse des Gyroskops, die nach Art eines Bajonettverschlusses arbeitet. Die Winkelverstellung und die Montage und Demontage des Gehäuses des Gyroskops ist dank der Erfindung ohne Werkzeug möglich. Weiterhin ermöglicht diese Ausführungsform ein Einstellen der Winkellage des Gyroskops von außen ohne Öffnung des Navigationsrechners.

Das Gehäuse des Gyroskops kann in mehreren festgelegten Winkelstellungen fixiert werden, wenn die Drehkulissen mehrere Rasteinbuchtungen zum Arretieren der Federzungen in festgelegte Winkelstellungen des Gehäuses des Gyroskops haben.

Das Gehäuse des Gyroskopes wird beim Einsetzen in die Gehäusewand zwangsläufig zentriert, wenn gemäß einer anderen Weiterbildung der Erfindung die Drehkulissen konisch zur Seite des Gehäuses des Gyroskops hin verlaufen und die Federzungen jeweils mit ihrem freien Ende in die Rasteinbuchtungen greifen.

Das Gehäuse des Gyroskops rastet besonders sicher in den Einprägungen ein, kann jedoch bei entsprechender Kraftanwendung rastend verdreht werden, wenn die Rasteinbuchtungen trapezförmigen Querschnitt aufweisen und die freien Enden der Federzungen bogenförmig gerundet verlaufen.

Der Navigationsrechner ist fertigungstechnisch besonders vorteilhaft gestaltet, wenn auf der Oberseite des Gehäuses des Gyroskops eine Federplatte befestigt ist, welche die beiden Federzungen aufweist. Zugleich bildet eine solche Federplatte eine elektromagnetische Abschirmung für das Gyroskop.

Zusätzlich zur Wirkung durch die konischen Drehkulissen lässt sich gemäß einer anderen Weiterbildung der Erfindung eine Zentrierwirkung dadurch erreichen, dass das Gehäuse des Gyroskops in seiner Oberseite eine zentrische, im Querschnitt kreisförmige Öffnung hat und die Aufnahme eine entsprechende, in die kreisförmige Öffnung eingreifende Zentrierwölbung aufweist.

Die Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt in
- Fig.1: eine perspektivische Darstellung einer Gehäusewand eines Navigationsrechners,
- Fig.2: ein an der Gehäusewand zu befestigendes Gehäuse eines Gyroskops,
- Fig.3: eine gegenüber Figur 1 im Maßstab vergrößerte Darstellung einer Aufnahme in der Gehäusewand für das Gehäuse des Gyroskops.

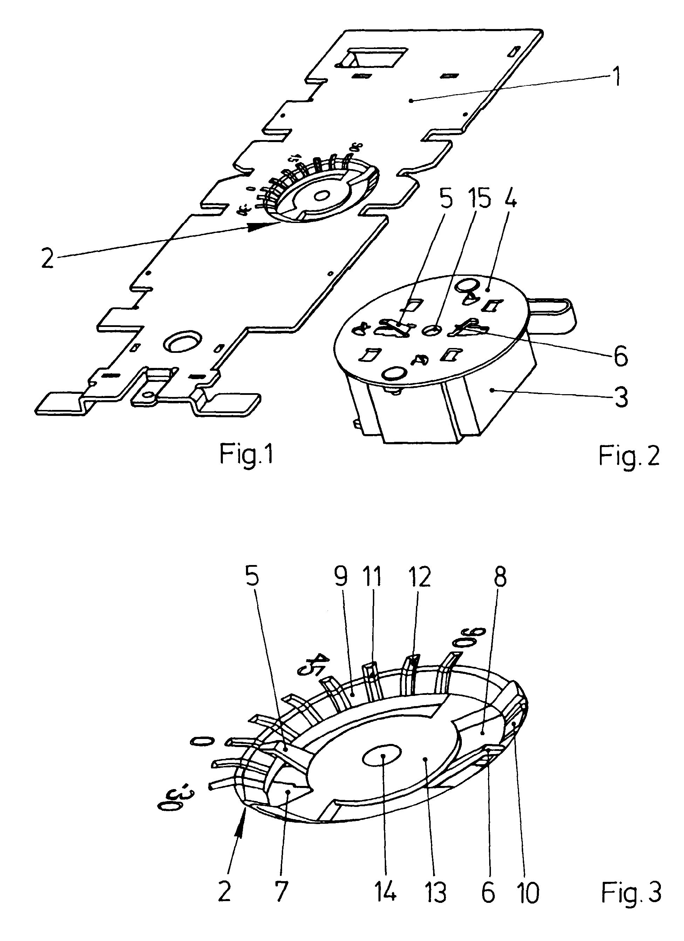

Die Figur 1 zeigt eine Gehäusewand 1, welche eine im Querschnitt kreisförmige Aufnahme 2 hat, in die ein in Figur 2 dargestelltes Gehäuse 3 eines Gyroskops von unten her eingesetzt werden kann.

Wie die Figur 2 zeigt, ist auf der Oberseite des Gehäuses 3 des Gyroskops eine Federplatte 4 befestigt, welche zwei aus ihrer Ebene heraus nach oben und zugleich radial nach außen gerichtete Federzungen 5, 6 aufweist.

Die Figur 3 lässt erkennen, dass die Aufnahme 2 zwei Durchlässe 7, 8 hat, durch die in einer Winkellage des Gehäuses 3 des Gyroskops die Federzungen 5, 6 von unten her hindurchgeführt werden können. Dreht man anschließend das Gehäuse 3, dann gelangen die Federzungen 5, 6 über jeweils eine konisch ausgebildete Drehkulisse 9, 10, so dass das Gehäuse 3 nach Art eines Bajonetts gehalten wird. In den beiden Drehkulissen 9, 10 sind im Querschnitt trapezförmige Rasteinbuchtungen 11, 12 vorgesehen, in welche die Federzungen 5, 6 mit gerundeten, freien Enden zu verrasten vermögen.

In der Figur 3 erkennt man zusätzlich, dass die Aufnahme 2 von einer Anlageplatte 13 überbrückt wird, welche eine zentrale, nach unten gerichtete Zentrierwölbung 14 hat. Diese Zentrierwölbung 14 ist so bemessen, dass sie in eine im Querschnitt kreisförmige, in der Figur 2 dargestellte zentrische Öffnung 15 der Federplatte 4 des Gehäuses 3 zu greifen vermag und dadurch das Gehäuse 3 zusätzlich in der Aufnahme 2 zu zentrieren vermag.

## Patentansprüche

1. Für ein Kraftfahrzeug bestimmter Navigationsrechner, welcher eine Gehäusewand mit einem daran befestigten, in einem separaten Gehäuse angeordneten Gyroskop hat, das zur Ermittlung einer Fahrzeugdrehung um seine Vertikalachse in einer horizontalen Einbaulage ausgerichtet ist, **dadurch gekennzeichnet,** dass das Gehäuse (3) des Gyroskops winkelverstellbar in der Gehäusewand (1) des Navigationsrechners angeordnet ist.

2. Navigationsrechner nach Anspruch 1, **dadurch gekenn zeichnet**, dass das Gehäuse (3) des Gyroskops zwei aus seiner Oberseite nach oben und zugleich radial nach außen gerichtete, einander gegenüberliegende Federzungen (5, 6) hat und die Gehäusewand (1) eine Aufnahme (2) mit zwei gegenüberliegenden Durchlässen (7, 8) zum Durchschieben der Federzungen (5, 6) und im Anschluss an die Durchlässe (7, 8) jeweils eine kreisbogenförmige Drehkulisse (9, 10) als Auflage für die Federzungen (5, 6) hat.

3. Navigationsrechner nach Anspruch 2, **dadurch gekenn zeichnet,** dass die Drehkulissen mehrere Rasteinbuchtungen (11, 12) zum Arretieren der Federzungen (5, 6) in festgelegte Winkelstellungen des Gehäuses (3) des Gyroskops haben.

4. Navigationsrechner nach zumindest einem der vorangehenden Ansprüche, **dadurch gekennzeichnet,** dass die Drehkulissen (9, 10) konisch zur Seite des Gehäuses (3) des Gyroskops hin verlaufen und die Federzungen (5, 6) jeweils mit ihrem freien Ende in die Rasteinbuchtungen (11, 12) greifen.

5. Navigationsrechner nach zumindest einem der vorangehenden Ansprüche, **dadurch gekennzeichnet,** dass die Rasteinbuchtungen (11, 12) trapezförmigen Querschnitt aufweisen und die freien Enden der Federzungen (5, 6) bogenförmig gerundet verlaufen.

6. Navigationsrechner nach zumindest einem der vorangehenden Ansprüche, **dadurch gekennzeichnet,** dass auf der Oberseite des Gehäuses (3) des Gyroskops eine Federplatte (4) befestigt ist, welche die beiden Federzungen (5, 6) aufweist.

7. Navigationsrechner nach zumindest einem der vorangehenden Ansprüche, **dadurch gekennzeichnet,** dass das Gehäuse (3) des Gyroskops in seiner Oberseite eine zentrische, im Querschnitt kreisförmige Öffnung (15) hat und die Aufnahme (2) eine entsprechende, in die kreisförmige Öffnung (15) eingreifende Zentrierwölbung (14) aufweist.
